# EUROPEAN PATENT SPECIFICATION

(11) **EP 1 610 617 B1**
(45) Date of publication and mention of the grant of the patent: **03.12.2008**
(21) Application number: 03716756.6
(22) Date of filing: 25.03.2003
(51) Int. Cl.: A23B 7/157, A23B 7/005

(54) **METHOD OF TREATING AVOCADOS AND METHOD OF PREPARING GUACAMOLE THEREFROM**
VERFAHREN ZUR BEHANDLUNG VON AVOCADO UND VERFAHREN ZUR HERSTELLUNG VON GUACAMOLE
PROCEDE DE TRAITEMENT DES AVOCATS ET PROCEDE DE PREPARATION DU GUACAMOLE A PARTIR DE CEUX-CI

(43) Date of publication of application: 04.01.2006
(73) Proprietor: GENERAL MILLS, INC., Minneapolis Minnesota 55426 (US)
(72) Inventor: GRIEBEL, Jonathan, M., Maple Grove, MN 55311 (US); KARGEL, B., Colleen, Chisago, MN 55013 (US)
(74) Representative: Vossius & Partner
(86) International application number: PCT/US2003/008746
(87) International publication number: WO 2004/100670

(56) References cited:
- US-A- 2 641 548
- US-A- 3 398 001
- US-A- 4 814 193
- US-A- 5 389 389
- US-A- 5 595 775
- US-A- 5 871 794
- US-A- 5 939 117
- US-B1- 6 358 555

## Description

Avocados are a delicious food with desirable health benefits. Avocados are known to contain high amounts of phytochemicals such as lutein, vitamin E, glutathione, and beta-sitosterol. Lutein is known to protect against prostrate cancer and macular diseases and degeneration. Vitamin E is a powerful antioxidant thought to help slow the aging process and assist in protecting against cardiovascular disease and various forms of cancer. Glutathione functions as an antioxidant to neutralize free radicals. Beta-sitosterol lowers blood cholesterol levels by blocking the absorption of cholesterol in the bloodstream. Additionally, avocados are high in monounsaturated fats proven to help lower the amount of LDL cholesterol and boost the amount of HDL cholesterol in the bloodstream. Avocados also contain a large amount of folate that promotes healthy cell and tissue development Folate ingestion is especially important in pregnant women because it helps protect against neural tube defects. Avocados are also good sources of potassium, magnesium, and are high in fiber.

The avocado is an anomaly among fruits in several ways making it a difficult food to prepare and with which to cook. First, cell division continues throughout the life of the fruit. Second, the avocado produces fat instead of sugar, as do most other fruits. With a fat content of 20% it has about 20 times the average fat found in most other fruits. Third, during ripening the sugar content decreases rapidly instead of increasing as occurs in most other fruits. Fourth, the fruit will not ripen as long as it remains on the tree and the skin is unbroken. Thus the best way to store avocados is to leave them on the tree and this is commonly done for up to seven months after maturity. The leaves of the tree provide a hormone to the avocado that prevents ripening. Harvesting the fruit cuts off the supply of this inhibitory substance and initiates the production of ethylene, which leads to ripening of the avocado.

The avocado is also unique among fruits in its inability to metabolize anaerobically. If deprived of oxygen (in a tightly sealed plastic bag, for example), the ripening process ceases and when oxygen is restored, the fruit spoils. Avocados are also unusual because they are highly susceptible to chilling injury. If they are stored at refrigeration temperatures for very long they will discolor and develop off-flavors.

Many people throughout the world enjoy eating avocados. However, due to difficulties in storing sliced avocado, and the rapid degradation of their desirable organoleptic traits once they are cut, avocados are not widely used in shelf stable foods. Instead, avocados are largely enjoyed only in manners that require immediate consumption such as in salads, in sushi, on sandwiches, in guacamole, or simply sliced. Moreover, the harsh treatment necessary to render most foods shelf stable further degrades the avocados to an undesirable state. In particular, the heat and pressure necessary to retort a food would activate the native enzymes and undesirably affect texture, taste, and appearance of an avocado and likely negatively affect the product of which the avocado is part.

As previously mentioned, unless avocados are immediately consumed after slicing, they are difficult to use because their flavor and color degrades rapidly. This is true whether or not the sliced avocado is maintained at room temperature or at refrigeration temperature. The reason for this is that avocados have a high fat content. Avocados also contain large amounts of degradative enzymes such as lipases, lipoxygenases, polyphenoloxidase, and methyl pectinases. Once avocados are sliced the enzymes are released. The enzymes are then able to act upon the fat and other components of the fruit. The enzymes, in particular the lipases, degrade the fats and thus off flavors such as rancidity are developed. Enzymes also act to discolor or brown the fruit. Browning is in part due to the work of an enzyme called polyphenoloxidase which is also present in mushrooms, apricots, pears, cherries, peaches, and dates. The polyphenoloxidase oxidizes phenolic compounds in the tissue and causes them to condense into brown or gray polymers. In intact tissue the enzyme and the phenolic compounds are segregated, but when bruising or slicing disrupt cells, they come into contact with each other and react to form the dark pigments.

In addition, the air acts to degrade the appearance and possibly the flavor of avocados. The beautiful bright green color characteristic of a ripe avocado is from the chlorophyll present in the fruit. Magnesium in chlorophyll is oxidized upon exposure to the air. Once oxidized, chlorophyll turns from a vibrant green color to a brownish army green color. The oxidized chlorophyll is much less appetizing in appearance than the bright green of a freshly sliced avocado.

One food item that requires the use of avocados is guacamole. Due to the described problems associated with sliced avocados it has been impossible to prepare organoleptically desirable guacamole long in advance of consumption. Anyone who has prepared guacamole but has failed to eat the entire amount in one sitting or has failed to rapidly consume the guacamole has experienced a brown bitter concoction upon returning to the creation. In addition to the difficulties associated with using avocados, guacamole contains other reactive ingredients such as garlic and onions. When taken as a whole, guacamole has a very reactive flavoring system, which has added to the difficulty in preparing a shelf stable guacamole.

What is needed is a method of treating avocados that preserves the color and flavor of the avocados even after the avocados are sliced, or in the case of guacamole preparation, even after the avocados are macerated. An even greater problem arises when attempting to create a prepared shelf stable guacamole. Any heating that is required to enable safely storing a product at room temperature over extended periods of time further degrades avocados to a near unrecognizable state or at least to an unpalatable state. The heating only works to hasten the degradation that is manifested in color and flavor degradation.

Several methods have been proposed to attempt to preserve avocados. One method of preserving avocados is to freeze avocados. This might work except that the same problem of rapid degradation exists once the avocados are thawed. One attempt to utilize a freezing process is described in U.S. Patent No. 6,358,555 which discusses a process of cutting avocados into a plurality of pieces, removing seeds, heating the avocados in a steam tank by applying steam, removing the avocados from the steam tank and freezing the avocado pieces quickly at an ultra-low temperature. Preferably, certain additives such as baking powder, vinegar, salt, wine and the like are provided to the avocado pieces before heating the avocados by the steam.

Other references also teach heating and then freezing avocados in an attempt to minimize color and flavor degradation and to store the treated avocados. U.S. Patent No. 5,595,775 discloses treating whole or cut pieces of fruit or vegetable with microwaves at a temperature not exceeding 45 degrees centigrade and then freezing the treated fruit or vegetable. An antibrowning agent is added to the fruit or vegetable before treatment with microwave. A preferred antibrowning agent provided in the patent is sodium disulfite. This reference discloses that preferably 5% to 40% by weight water is removed from the fruit or vegetable during the microwave treatment.

Yet another reference, U.S. Patent No. 1,242,728 to Schneible discloses immersing a fresh vegetable in a dilute solution of sodium bicarbonate. Sodium bicarbonate has a pH of about 8. The temperature of the solution is maintained at about 65 degrees centigrade. The patent reports that this temperature is sufficient to cause the alkali to rapidly penetrate the surface film of the vegetable and react quickly on the organic acids. The reference cautions that the temperature of the bath should not be heated to a temperature where the cellular structure of the vegetable is caused to give up any of its contained juices. The vegetable may first be cleaned, and prepared, as by slicing if desired. This reference only addresses treating vegetables such as spinach, beans, peas, kale, asparagus, and the like and only lists sodium bicarbonate and calcium hydrate as the alkali which are both very weak bases. Schneible does not suggest treating fruits such as avocados. Likewise, Schneible does not teach or suggest treating vegetables having high fat contents or vegetables that contain lipases.

Harold McGee describes other methods of reducing browning in the book On Food and Cooking, the Science and Lore of the Kitchen. In the book he states that the single handiest method of preventing browning is to use lemon juice. He continues by saying that the polyphenoloxidase enzyme of the avocado responsible for browning works very slowly in highly acidic conditions. This, therefore explains the common addition of lemon or lime juic to avocado containing foods such as guacamole.US-A-4,814,193 discloses a certain process for reducing the microbial population on the surface of food materials, such as fruits and vegetables. US-A-5,389,389 relates to specific compositions and methods for inhibiting browning of processed produce. US-A-5,871,794 discloses a certain stabilized guacamole and a method for making the same.

Due to their numerous health benefits it would be desirable to improve the access of avocados to more people. Yet, as just described the avocado is a very unique fruit and methods of storing the sliced fruit remain elusive. A method of preserving avocados in a manner to make foods containing them shelf stable is needed. A method is needed that inhibits the fat present in avocados from turning rancid yet also desirably maintains the bright green color of the fruit. Thus, the ideal method would inhibit rancidity and discoloration of the fruit yet allow long term shelf storage of foods containing avocados.

A method of treating avocados in order to preserve the taste, texture, and appearance is provided. Pitted, peeled avocados are immersed in an alkaline solution having a pH of greater than 8. The avocado halves are then heated to a temperature sufficient substantially to inactivate the native degradative enzymes. Preferably the avocados are sliced minimally before the pits are removed and before they are treated.

The treated avocados are useful in preparing guacamole. A method of preparing guacamole is also provided. The treated avocado halves are macerated or cut into a plurality of pieces depending upon the preference of the ultimate consumer. Flavoring agents such as an acid, onion pieces, and garlic are added to the prepared avocado. An antioxidant and/or glycerol are also optionally added to the mixture. The prepared guacamole is then consumed, refrigerated, or jarred or canned by known methods suitable for preparing shelf stable foods. These include but are not limited to retorting and hot fill or sterilization fill methods of canning.

In particular, in one aspect the present invention relates to a method of processing avocado meat comprising heating the avocado to a temperature sufficient to substantially denature native degradative enzymes while in an environment having a pH of greater than 8, wherein said heating step comprises heating to a temperature of at least 71°C (160 degrees F). In another aspect, the present invention relates to a method of manufacturing guacamole comprising the steps of a) preparing avocado comprising pitting, peeling and heating to a temperature of at least 71°C (160 degrees F) under alkaline conditions of greater than pH 8 to reduce the development of foul tasting flavors and reduce the development of brown coloration; b) macerating the avocado; and c) adding flavoring agents to the macerated avocado.

Avocados are first pitted in a manner to minimize the incisions made to the meat of the avocado. Halving the avocado and removing the pit from the meat is one method to accomplish this. Preferably the avocado is only sliced once. This single slice most preferably traverses the length of the avocado thereby making removal of the pit easiest and also dissects the thickest part of the avocado meat. Slicing the avocado in this manner assists both transferring heat through the fruit and also in further processing. After slicing the pits are preferably removed since rarely, if ever, is the avocado pit ingested. The pits are discarded. The skin is also removed from the meat of the avocado. This is accomplished either by scooping the meat out from the skin or simply cutting the skin away from the meat. Both pitting and peeling are highly desirable before the avocado is eaten. When referring to the term "meat" herein it is presumed that the avocado flesh is largely intact. That is, the fresh has not been mashed, minced, macerated or the like. Rather, the avocado flesh remains in large portions such as in the case of a peeled and pitted, halved, quartered, minimally sliced or the like avocado.

It is important that the avocados are not handled roughly, are minimally cut, not mashed, or otherwise macerated before further processing. It is believed that rough handling and excessive cutting of the avocado releases the degradative enzymes. Once the enzymes are released they are able to begin their reactions to create bitter flavors and an unappetizing color in the avocado meat. Likewise, exposing the meat to air causes oxidation of chlorophyll thereby creating another source for browning or discoloring the fruit in addition to the enzymatic browning. In order to minimize the release of such enzymes, and minimize oxidation, the avocado meat is preferably perforated or incised as little as possible before further processing occurs.

The avocado meat that are preferably avocado halves are then placed in an alkaline environment. The alkaline environment may be created by placing the avocados in an alkaline solution, providing a mist of alkaline solution, or by adding a chemical, either dry or liquid, directly to the avocado meat An alkaline environment desired to practice the method of the present invention is a pH of greater than about 8. Preferably, the alkaline environment of the invention has a pH of between about 9 and 11. Most preferably the pH is about 10.

Any number of compounds generally recognized or developed as safe in foods would be useful to create the alkaline environment in which the avocado halves are placed. In particular sodium tetrapyrophosphate is useful. Additionally, sodium bicarbonate or sodium hydroxide are used or any combination of compounds suitable to raise the pH to greater than 8 are useful.

Once the avocados are placed in the alkaline environment they are heated. Preferably, the heating begins simultaneously with placing the avocados in the alkaline environment. This is accomplished by placing the avocados in rapidly boiling alkaline solution. The combination of alkalinity and heating is believed to beneficially preserve the avocado meat without the commonly known degradation experienced when avocados are sliced or are otherwise processed for stability.

Heat can be applied to the avocado meat in any conventional method. If the avocados are immersed in an alkaline solution the solution containing the avocados may be heated by bringing the solution to its boiling point. Steam may also be applied to the avocados to cause them to heat. If steam is applied, a steam injected ribbon blender as is commonly available and is commonly known in the industry is useful. Alternatively, microwave energy may be applied to the avocados. Additionally, the avocados might instead be baked or fried in order to raise the temperature of the meat. Any method known to apply heat to the avocados directly or indirectly may be used in accordance with the present invention. The method of heating the avocados may or may not desiccate or partially desiccate the avocado meat. For example, baking or roasting the avocado would likely partially desiccate the meat whereas boiling or steaming would not likely desiccate the meat to the same extent. It is, however, useful to consider the amount of desiccation caused by the heating process, if any, when deciding which method to use. One should contemplate the ultimate use of the avocados to determine whether or not the use of desiccated avocado meat is appropriate. Frying, for example, may not be suitable for all end uses of the avocado meat. One skilled in the art will readily recognize whether a heating method is appropriate given the desired end use of the avocado meat.

In addition to considering the amount of desiccation caused by the heating method one should preferably also consider the rapidity of raising the internal temperature of the meat. As mentioned, the reason for heating the avocado is to denature degradative enzymes. As the temperature rises, it is important that the heat should not catalyze the enzymatic reactions that cause degradation of the avocado meat. That is, the enzyme or enzymes that cause rancidity and discoloration. Thus, it has been developed in accordance with the present invention that the heat is raised quickly enough so as not to catalyze the reactions but to reach a temperature that is sufficient to denature the enzymes. In a preferred embodiment avocados are immersed into rapidly boiling solution having an alkaline pH. Of course, heating foods such as avocados can be very difficult because the "fresh" taste of the avocado is desirable. When heating any food it can be difficult to heat the food to a critical temperature yet not to heat it to such a temperature so as to have the food develop a "cooked" taste. This is generally true when pasteurizing foods and retorting foods.

The method of applying heat to the avocado is less critical than the temperature to which the avocado meat is preferably raised. Preferably the internal temperature of the avocado meat is raised to such a temperature and held for such a time so as to substantially denature the degradative enzymes native to avocados. It is believed that the temperature necessary to inactivate the native enzymes is at least about 160 degrees Fahrenheit or 71 degrees Celsius. Of course, denaturing proteins such as enzymes is dependent upon both the temperature to which the protein is raised and the time for which the temperature is maintained. Therefore, if the temperature of the avocado meat is on the low side, the temperature should be maintained for a longer period of time than would be required to denature the enzymes at a higher temperature. In contrast, if a high temperature were attained in the meat, the denaturization would occur more rapidly. It is theorized, however, that preferably the temperature of the avocado meat is raised quickly and to a point that causes denaturization of the degradative enzymes rather then raising the temperature slowly through the zone of activity of the degradative enzymes thus catalyzing degradation rather than preventing it. Thus, the processing conditions necessary for the present invention are a combination of temperature (which may vary) held for a length of time sufficient to substantially inactivate or denature the enzymes.

Preferably the internal temperature of the avocado meat as can be measured by any instant read meat thermometer would be greater than about 160 degrees Fahrenheit or 71 degrees Celsius. It is, therefore, preferable that substantially all of the avocado meat be brought to at least this temperature. More preferably a desired internal temperature of greater than about 175 degrees Fahrenheit or 79 degrees Celsius will be attained, and most preferably an internal temperature of greater than about 190 degrees Fahrenheit or 88 degrees Celsius is achieved. The temperature to which the avocado meat is raised is not alone a critical aspect of the invention. Rather, a critical component with respect to heating of the avocado meat is to raise the temperature to such a temperature at such a rate for such a time as is necessary to substantially denature the degradative enzymes native to the avocado. It is believed that the avocado meat that is treated in accordance with the present invention can remain at room temperature without substantially discoloring and without developing overwhelming off flavors such as rancidity or the like for a longer amount of time than an untreated piece of avocado meat. With preferred results a treated avocado remains green and does not turn brown indefinitely when placed at room temperature. In fact, a treated avocado likely will desiccate and shrivel before it discolors due to enzymatic activity. It is hypothesized that preferably nearly all of the polyphenoloxide is deactived when practicing a preferred embodiment of the invention.

Once the avocado meat is treated with heat in an alkaline environment (hereinafter referred to as "treated avocado") it is ready to use or store. That is, once treated, the enzymes are effectively no longer able to substantially harm the meat. The avocados after treatment would be slightly basic. Therefore, acidulates such as lemon or lime juice, ascorbic acid or citric acid, vinegar, or wine may be added to adjust the pH to a preferable level of about neutral or slightly acidic as different tastes may prefer. If shelf stable guacamole preparation is desired the pH is preferably adjusted to less than about 4.2. Acidulates, however, are not added primarily to preserve the avocado as is widely believed and as is published in numerous cooking and cookbooks. Rather, acidulates are added for the purpose of adjusting the pH and for the flavor that both the acidulates and the adjusted pH imparts on the end food product.

After treatment the avocado meat is ready to slice into a plurality of pieces or chunks. Such a preparation is suitable to use in sushi, on sandwiches, or to eat plain. The beauty of using treated avocado meat is that the treated avocado may sit at room or refrigeration temperature for an increased time without the concomitant browning and rancidity often associated with sliced avocado. Once treated the avocado halves would also be ready for maceration as may be appropriate when preparing avocado butter or guacamole. The amount of maceration will differ for the various food products. Again, it is important that the avocado meat not be overly sliced or macerated before heat and alkaline treatment as this would likely result in undue release of the enzymes into the injured meat and that would initiate degradation. The treated avocado halves, preferably with adjusted pH, may then be canned or jarred either as halves, or sliced, diced, minced, mashed or the like. Alternatively, the treated avocados may be ingested. Certain processes suitable for rendering the treated avocados are discussed below after the preparation of the guacamole is described. A canning process is identical whether the avocados are canned alone or are canned as part of a food such as guacamole.

If guacamole is desired additional ingredients may be added and combined with the treated avocado. Each chef has his or her own preferred ingredients used to create guacamole. Traditional ingredients include but are not limited to onion, garlic, and lemon or lime juice. Instead of citrus juice, vinegar or wine may optionally be added as the acid. In addition to the citrus juice, grated lime or lemon peel is sometimes added to the guacamole for flavor. Some people also prefer ripe plum or roma tomatoes or tomatillo chunks in their guacamole while still others like to add some pepper such as jalapeno, Serrano, poblano, or ground cayenne pepper. The fresh peppers are optionally roasted before adding to the guacamole to impart a smoky flavor to the final product. Less common ingredients include a small amount of Dijon style mustard, mayonnaise, shallots, sour cream, sugar, or water. While some of these ingredients provide flavor to the guacamole, others, depending upon the amount added, are included to adjust the texture of the product. Various herbs and seasonings are also possible additions to guacamole. These include but are not limited to fresh coriander, ground cumin, salt, ground black pepper, and either fresh or dried cilantro. As with many foods the additional ingredients are largely personal preference.

If a consumer product is desired, additional ingredients can potentially be added to the guacamole to enhance appearance and taste of the final product. For example, colorants such as colorant number 09207 as is available from Sensient of St. Louis, MO are added. In addition mixed tocopherols such as Grindox 539 available from Danisco of New Century, KS are potentially added. While not required, certain antioxidants are known that are believed to prevent oxidative processes such as fat oxidation and browning and generally aid when attempting to store a food at room temperature. Starch is also an additive that is useful for consistency of the final product and possibly to act as a filler. Glycerol may optionally be added as well. It is believed that glycerol helps to enhance the flavors present in the guacamole and may help to mask any flavors created by aldehydes.

If a shelf stable food is desired, a hot fill process may be used. The guacamole would be first heated before it is loaded into containers. If the pH of the guacamole is at least about 4.2 it can be heated to about 195 degrees to about 215 degrees Fahrenheit (91°C to 102°C) for about 3 to 7 minutes. Preferably, the guacamole would have a pH of is less than about 4.2 and thus be heated to between about 200 degrees F (93°C) to about 210 degrees Fahrenheit (99°C) for about 4 to about 6 minutes. In order to use a hot fill method using processes of the present invention, acid is preferably added to the guacamole to lower the pH to at least 4.2.

Pasteurized or sterilized colorants may optionally be added to the guacamole preparation at this point. Coloring agents are often heat sensitive and while they may be added earlier in the process they may degrade during a pasteurization or hot fill process. Alternatively, colorants, such as Lakes, that are stable to both heat and pH variations may be added anywhere during the process.

If the guacamole is heat treated as just described, it can be placed into jars or cans while it is still hot. Such a technique is often referred to in the industry as a "hot fill." The containers are sterilized by the food that they will hold. The containers are then filled, sealed, and placed in boiling water for about two minutes. This additional heating is a further endeavor to eliminate the food borne pathogens from the guacamole. After the boiling bath the sealed containers are placed in a chilled freezer at about 0 degrees Fahrenheit (-17°C) for about 20 to 40 minutes depending upon the size of the container. This chilling is important to reduce the temperature of the product and to minimize cooking of the guacamole. Any cooked taste is obviously undesirable as guacamole is a food that is widely recognized as eaten raw or uncooked. Thus, the chilling is preferably done for about 25 to 30 minutes for an 10-ounce jar or can of guacamole. The containers are then removed from the freezer and placed in an ice bath to further cool the contents.

Given the acidity of the final product these temperatures and times are all that are necessary to kill vegetative food-borne pathogens such as *Clostridium botulinum. C. botulinum* is the most dangerous pathogen in the canning process because it is an anaerobic bacteria that thrives in the airless cans, produces a deadly nerve toxin, and creates spores. *C*. *botulinum* forms spores when subjected to adverse conditions such as temperature extremes, dehydration, or extreme pH. Under certain conditions and when in an anaerobic environment these spores can germinate into vegetative bacteria and the bacteria can grow and produce the deadly toxins. Given a preferable low pH of 4.2 or less of a product produced according to the invention growth of any bacteria that would germinate from spores is prevented thus avoiding production of the *C*. *botulinum* toxin. The time and temperatures listed are of course on a sliding scale. If the pH of the product is lower the temperature may be lower as well as the time shorter. Optionally, one may heat the guacamole to a lower temperature but hold it for a longer time. This process is similar to the denaturization of the degradative enzymes described above in that the killing of pathogens is dependent upon three factors (whereas the inactivation of the enzymes was substantially dependent upon two factors) these being the pH of the food, the temperature to which the food is heated and the time for which the food is held at that temperature. When retorting foods, the temperature and pressure of the product is raised to a point to deactivate any spores. Thus, foods that are retorted may have a higher pH than those that undergo the hot fill process. A guacamole may be prepared according to the present invention that is retorted and as such less acid would likely be added to the guacamole before heat treatment/packaging occurs.

In addition to destroying harmful organisms, the tight seal of canning isolates the guacamole completely from external contamination. This is important since the guacamole is to be stored at room temperature. The thermal processing described above must do both. Since canned foods are stored at room temperature after processing, it is imperative to destroy all harmful organisms. Otherwise, once the temperature drops to room temperature after processing, the pathogens will resume their growth and spoil the food. Highly acidic foods such as the guacamole described herein need the least severe treatment because their low pH inhibits the growth of most microbes.

Optionally the guacamole would not be hot when loaded into cans. After such filling, the cans are sealed. The guacamole would then be subjected to a retort process as discussed above, which is heating the contents of a can. Thus the guacamole is subjected to heat under pressure. Again, the temperature and time at and for which the guacamole must be retorted is dependent upon the three factors mentioned above: pH, time, and temperature.

### Example

Shelf stable guacamole was prepared in the following manner.

Fresh hass avocados were sliced in half lengthwise. The pits from the avocados were removed and discarded. The skin was removed from the avocado halves by scooping the meat, halves intact, from the skins. The pitted, skinned avocado halves weighed 1.28 kg and were placed in a commercially available steam injection ribbon blender.

Glycerol (15.9 grams), tocopherols (3 grams), sodium tetrapyrophosphate (1.5 grams), salt (42 grams), and sugar (15.9 grams) were added to the avocado halves. Next the steam was turned on and remained on until the avocados were heated to an internal temperature of 190 degrees F (88°C) as measured by an instant read thermometer (about 3 minutes).

Once the avocados were heated to at least 190 degrees F (88°C) the steam was turned off. Diced onions, diced garlic, diced tomatoes, flavorings, and colorings were added along with acidulates, water, and starch are combined. The avocado meat was macerated during the combining step. Amounts of each ingredient are provided in the table below.

| **Ingredient** | **Percent by weight** |
|---|---|
| Fresh avocado halves | 42.76 |
| Fresh diced onion | 10.00 |
| Canned diced tomato | 7.00 |
| Salt | 1.40 |
| Water | 22.00 |
| Thermoflo starch available from National Starch of Bridgewater, NJ. | 3.00 |
| Minced fresh jalapenos | 1.50 |
| Fresh garlic puree | 1.00 |
| Sugar | 0.53 |
| Glycerol | 0.53 |
| Mixed tocopherols Grindox 539 from Danisco of New Century, KS. | 0.10 |
| Citric acid | 0.22 |
| Ascorbic acid | 0.22 |
| Sodium Tetrapyrophosphate | 0.05 |
| Givuadan lemon flavor 566501 | 0.30 |
| WJ Lake green dye #09270, 10% solution | 0.11 |

The combination was heated to 205 degrees Fahrenheit (96°C) and held at that temperature for 5 minutes.

Glass jars having a capacity of 10 ounces were filled, with the guacamole while the guacamole slurry was still hot. The jars were sealed with caps and the sealed jars were placed in a boiling water bath for 2 minutes. After the boiling water bath the jars were placed in a chilled freezer having a temperature of 0 degrees F for 30 minutes after which time they were placed in an ice bath for about 120 minutes until they cooled to about 70 degrees F.

The jars of guacamole were stored at 70 degrees Fahrenheit (21°C) for 3 months. After 3 months the appearance of the guacamole remained the same. That is, the color of the guacamole remained a bright green color. A 3 month old jar of guacamole was open and tasted for flavor. The guacamole was edible and had significantly less bitter taste than the guacamole prepared with untreated avocados and stored for the same amount of time.

One skilled in the art will recognize that although preferred embodiments are illustrated and described herein, many modifications and variations of the present invention are possible in light of the above teachings within the purview of the claims without departing from the spirit and scope of the invention.

## Claims

1. A method of processing avocado meat comprising heating the avocado to a temperature sufficient to substantially denature native degradative enzymes while in an environment having a pH of greater than 8, wherein said heating step comprises heating to a temperature of a least 71°C (160 degrees F).

2. The method of claim 1 wherein the avocado meat is heated to at least 88°C (190 degrees F).

3. The method of claim 1 wherein the avocado meat is pitted and peeled before heating.

4. the method of claim 1 wherein the pH is greater than 9.

5. The method of claim 1 wherein the enzymes are comprised of lipases, pectinases, lipoxygenases, and polyphenoloxidases.

6. The method of claim 1 wherein the avocado meat is comprised of avocado halves with the pit and peel removed, or
wherein the avocado meat is comprised of avocado quarters with the pit and peel removed.

7. The method of claim 1 wherein the heating comprises immersing the avocado meat into a boiling alkaline solution.

8. The method of claim 1 wherein said heating step is accomplished in 5 minutes or less.

9. The method of claim 1 wherein said heating step comprises heating to a temperature of at least 77°C (170 degrees F).

10. The method of claim 1 wherein said alkaline environment is accomplished by adding a chemical comprising sodium tetrapyrophosphate.

11. A method of manufacturing guacamole comprising the steps of
a) preparing avocado comprising pitting, peeling and heating to a temperature of at least 71°C (160 degrees F) under alkaline conditions of greater than pH 8 to reduce the development of foul tasting flavors and reduce the development of brown coloration;
b) macerating the avocado; and
c) adding flavoring agents to the macerated avocado.

12. The method of claim 11 further comprising step (d) placing the avocado, onion and garlic mixture in a container under conditions to sterilize the container.

13. The method of claim 11 further comprising sealing the containers.

14. The method of claim 11 wherein the flavoring agents are added before the macerating step.

15. The method of claim 11 further comprising adding glycerol during step c.

16. The method of claim 1 or 11 wherein said heating is comprised of steaming.

17. The method of claim 11 further comprising adding an antioxidant during step

18. The method of claim 11 wherein the flavoring agents comprise onion and garlic.

## Patentansprüche

1. Verfahren zum Verarbeiten von Avocadofleisch, umfassend das Erwärmen der Avocado auf eine Temperatur, die ausreicht, um Abbauenzyme wesentlich zu denaturieren, in einer Umgebung mit einem pH-Wert von größer als 8, wobei der Schritt des Erwärmens das Erwärmen auf eine Temperatur von wenigstens 71 °C (160 Grad F) umfasst.

2. Verfahren gemäß Anspruch 1, wobei das Avocadofleisch auf wenigstens 88 °C (190 Grad F) erwärmt wird.

3. Verfahren gemäß Anspruch 1, wobei das Avocadofleisch vor dem Erwärmen entkernt und geschält wird.

4. Verfahren gemäß Anspruch 1, wobei der pH-Wert größer als 9 ist.

5. Verfahren gemäß Anspruch 1, wobei die Enzyme Lipasen, Pectinasen, Lipoxygenasen und Polyphenoloxidasen beinhalten.

6. Verfahren gemäß Anspruch 1, wobei das Avocadofleisch aus Avocadohälften, bei welchen Kern und Schale entfernt sind, besteht oder
wobei das Avocadofleisch aus Avocadovierteln, bei welchen Kern und Schale entfernt sind, besteht.

7. Verfahren gemäß Anspruch 1, wobei das Erwärmen das Eintauchen des Avocadofleisches in eine kochende alkalische Lösung umfasst.

8. Verfahren gemäß Anspruch 1, wobei der Schritt des Erwärmens innerhalb von 5 Minuten oder weniger durchgeführt wird.

9. Verfahren gemäß Anspruch 1, wobei der Schritt des Erwärmens das Erwärmen auf eine Temperatur von wenigstens 77°C (170 Grad F) umfasst.

10. Verfahren gemäß Anspruch 1, wobei die alkalische Umgebung durch Zusetzen einer Chemikalie, welche Natriumtetrapyrophosphat umfasst, erhalten wird.

11. Verfahren zum Herstellen von Guacamol, umfassend folgende Schritte:
a) Aufbereiten von Avocado, umfassend Entkernen, Schälen und Erwärmen auf eine Temperatur von wenigstens 71°C (160 Grad F) unter alkalischen Bedingungen mit einem pH-Wert größer als 8, um die Entwicklung unangenehm schmeckender Aromen zu verringern und die Entwicklung brauner Färbung zu verringern;
b) Mazerieren der Avocado; und
c) Zusetzen von geschmacksgebenden Mitteln zu der mazerierten Avocado.

12. Verfahren gemäß Anspruch 11, ferner umfassend Schritt (d): Einbringen des Gemischs von Avocado, Zwiebel und Knoblauch in einen Behälter unter Bedingungen zum Sterilisieren des Behälters.

13. Verfahren gemäß Anspruch 11, ferner umfassend das Abdichten der Behälter.

14. Verfahren gemäß Anspruch 11, wobei die geschmacksgebenden Mittel vor dem Mazerierungsschritt zugesetzt werden.

15. Verfahren gemäß Anspruch 11, ferner umfassend das Zusetzen von Glycerin während Schritt c.

16. Verfahren gemäß Anspruch 1 oder 11, wobei das Wärmen eine Dampfbehandlung beinhaltet.

17. Verfahren gemäß Anspruch 11, ferner umfassend das Zusetzen eines Antioxidationsmittels während Schritt c.

18. Verfahren gemäß Anspruch 11, wobei die geschmacksgebenden Mittel Zwiebel und Knoblauch umfassen.

## Revendications

1. Procédé de traitement de chair d'avocat comprenant le chauffage de l'avocat jusqu'à une température suffisante pour dénaturer sensiblement les enzymes de dégradation natives dans un environnement ayant un pH supérieur à 8, **caractérisé en ce que** ladite étape de chauffage comprend le chauffage jusqu'à une température d'au moins 71°C (160 degrés F).

2. Procédé selon la revendication 1, **caractérisé en ce que** la chair d'avocat est chauffée jusqu'à au moins 88°C (190 degrés F).

3. Procédé selon la revendication 1, **caractérisé en ce que** la chair d'avocat est dénoyautée et pelée avant chauffage.

4. Procédé selon la revendication 1, **caractérisé en ce que** le pH est supérieur à 9.

5. Procédé selon la revendication 1, **caractérisé en ce que** les enzymes comprennent des lipases, des pectinases, des lipoxygénases et des polyphénoloxydases.

6. Procédé selon la revendication 1, **caractérisé en ce que** la chair d'avocat comprend des demi-avocats dont le noyau et la peau ont été enlevés, ou **en ce que** la chair d'avocat comprend des quartiers d'avocat dont le noyau et la peau ont été enlevés.

7. Procédé selon la revendication 1, **caractérisé en ce que** le chauffage comprend l'immersion de la chair d'avocat dans une solution alcaline bouillante.

8. Procédé selon la revendication 1, **caractérisé en ce que** l'étape de chauffage est réalisée en 5 minutes ou moins.

9. Procédé selon la revendication 1, **caractérisé en ce que** l'étape de chauffage comprend le chauffage jusqu'à une température d'au moins 77°C (170 degrés F).

10. Procédé selon la revendication 1, **caractérisé en ce que** ledit environnement alcalin est réalisé en ajoutant un produit chimique comprenant du tétrapyrophosphate de sodium.

11. Procédé de fabrication de guacamole comprenant les étapes consistant à
a) préparer de l'avocat, ceci comprenant le dénoyautage, la pelure et le chauffage jusqu'à une température d'au moins 71°C (160 degrés F), dans des conditions alcalines supérieures à pH 8 pour réduire le développement d'arômes de mauvais goût et réduire le développement d'une coloration brune ;
b) macérer l'avocat ; et
c) ajouter des agents aromatisants à l'avocat macéré.

12. Procédé selon la revendication 11, comprenant en outre l'étape (d) consistant à placer le mélange d'avocat, d'oignon et d'ail dans un récipient dans des conditions pour stériliser le récipient.

13. Procédé selon la revendication 11, comprenant en outre la fermeture hermétique des récipients.

14. Procédé selon la revendication 11, **caractérisé en ce que** les agents aromatisants sont ajoutés avant l'étape de macération.

15. Procédé selon la revendication 11, comprenant en outre l'addition de glycérol pendant l'étape c.

16. Procédé selon la revendication 1 ou 11, **caractérisé en ce que** ledit chauffage comprend la cuisson à la vapeur.

17. Procédé selon la revendication 11, comprenant en outre l'addition d'un antioxydant pendant l'étape c.

18. Procédé selon la revendication 11, **caractérisé en ce que** les agents aromatisants comprennent l'oignon et l'ail.
